# EUROPEAN PATENT APPLICATION

(11) **EP 3 674 864 A1**
(43) Date of publication of application: **01.07.2020**
(21) Application number: 20157724.4
(22) Date of filing: 23.07.2014
(51) Int. Cl.: G06F 3/044

(54) **TOUCH SCREEN PANEL AND FABRICATING METHOD THEREOF**

(30) Priority: 24.07.2013 KR 20130087139
(62) Divisional of application: 14178152.6
(71) Applicant: Samsung Display Co., Ltd., Gyeonggi-do 17113 (KR)
(72) Inventor: KIM, Hyung-Chul, Gyeonggi-do (KR); PARK, Jung-Mok, Gyeonggi-do (KR); JO, Jae-Hyung, Gyeonggi-do (KR)
(74) Representative: Walaski, Jan Filip

(57) **Abstract**

A touch screen panel includes a substrate, first sensing patterns, second sensing patterns, and an insulating layer. The first sensing patterns may be configured to include a plurality of first sensing cells separated from one another as independent patterns. The second sensing patterns may be configured to include a plurality of second sensing cells formed on the substrate. The insulating layer may be interposed between the first and second connecting patterns at intersection portions of the first connecting patterns and the second connecting patterns. The insulating layer may be an island-shaped independent pattern at each intersection portion. End portions of each first connecting pattern may electrically connect adjacent first sensing cells. A width of a first region of each first connecting pattern may be wider than that of a second region.

## Description

The present invention relates to a touch screen panel and a fabricating method thereof.

A capacitive touch screen panel includes first sensing patterns formed along a first direction and second sensing patterns formed along a second direction in order to detect a contact position at which a touch input is applied to the touch screen panel. The first and second sensing patterns may be disposed in the same layer or different layers. In a case where the first and second sensing patterns are disposed in the same layer, it is advantageous to decrease the thickness of the touch screen panel, and it is possible to ensure uniform optical characteristics throughout the entire touch active area.

Embodiments provide a touch screen panel and a fabricating method thereof, which can prevent damage caused by static electricity.

There is provided a touch screen panel, including a substrate, first sensing patterns, second sensing patterns, and an insulating layer. The first sensing patterns may be configured to include a plurality of first sensing cells formed to be separated from one another as independent patterns, and first connecting patterns connecting the first sensing cells along a first direction. The second sensing patterns may be configured to include a plurality of second sensing cells formed on the substrate, and second connecting patterns connecting the second sensing cells along a second direction. The insulating layer may be interposed between the first and second connecting patterns at intersection portions of the first connecting patterns and the second connecting patterns. The insulating layer may be formed as an island-shaped independent pattern for each intersection portion.

End portions of each first connecting pattern electrically may connect adjacent first sensing cells exposed to the outside of the island-shaped insulating layer while overlapping with the adjacent sensing cells. The width of a first region of each first connecting pattern, overlapped with an edge of the insulating layer, may be formed wider than that of a second region intersecting each second connecting pattern. The width of a third region of each first connecting pattern, which is an edge region at the outside of the first region, may be formed narrower than that of the first region.

The first connecting patterns may be patterned so that the first region has a polygonal, elliptical, or circular shape. The first sensing cells and the first connecting patterns may be formed of different materials. The first sensing cells may be formed of a transparent electrode material, and the first connecting patterns may be formed of a metal. The first connecting patterns may be patterned in the shape of fine lines along the first direction. The width of both sides of the first region overlapped with the edge of the insulating layer may be enlarged without enlarging portions not so overlapped. Each first connecting pattern maybe formed on the insulating layer, and each second connecting pattern may be formed under the insulating layer. The second sensing cells may be integrally patterned with the second connecting patterns along the second direction. The first sensing cells and the second sensing cells may be alternately distributed and disposed in the same layer on the substrate so as not to overlap with each other.

There is provided a method of fabricating a touch screen panel. The method may include the following. A plurality of first sensing cells arranged in a first direction while being separated from each other as independent patterns maybe formed on a substrate, and a plurality of second sensing cells disposed between the first sensing cells and connected along a second direction may be formed on the substrate. An insulating layer may be formed as an island-shaped independent pattern on each second connecting pattern connecting the second sensing cells to each other. First connecting patterns may be formed on the insulating layer connecting the first sensing cells along the first direction. Two end portions of each first connecting pattern may be formed to overlap with adjacent first sensing cells exposed to the outside of the island-shaped insulating layer. The first connecting patterns may be patterned so that the width of a first region of each first connecting pattern, overlapped with an edge of the insulating layer, may be formed wider than that of a second region intersecting each second connecting pattern.

In the patterning of the first connecting patterns, the first connecting patterns may be patterned so that the width of a third region of each first connecting pattern, which is an edge region at the outside of the first region, may be formed narrower than that of the first region. The first connecting patterns maybe patterned so that the first region of each first connecting pattern has a polygonal, elliptical, or circular shape. The first connecting patterns may be patterned in the shape of fine lines along the first direction. The width of both sides of the first region overlapped with the edge of the insulating layer may be enlarged without enlarging portions not so overlapped. The first sensing cells, the second sensing cells and the second connecting patterns maybe formed of the same material in the same process. The second sensing cells and the second connecting patterns may be integrally patterned. The first sensing cells, the second sensing cells and the second connecting patterns may be formed of a transparent electrode material, and the first connecting patterns may be formed of a metal.

Features will become apparent to those of ordinary skill in the art by describing in detail exemplary embodiments with reference to the attached drawings.
FIG. 1 illustrates a plan view of a touch screen panel.
FIG. 2A illustrates a main portion plan view of an example of first and second sensing patterns formed in a touch active area.
FIG. 2B illustrates a sectional view taken along line I-I' of FIG. 2A.
FIG. 3A illustrates a main portion plan view of an example of first and second sensing patterns formed at an edge of the touch active area and outer lines connected to the first and second sensing patterns.
FIG. 3B illustrates a sectional view taken along line II-II' of FIG. 3A.
FIG. 4 illustrates a main portion plan view of an example of the first and second sensing patterns, which particularly illustrates an embodiment of first connecting patterns.
FIG. 5 illustrates a main portion plan view illustrating another example of the first and second sensing patterns, which particularly illustrates another embodiment of the first connecting patterns.
FIG. 6 illustrates a main portion plan view of still another example of the first and second sensing patterns, which particularly illustrates still another embodiment of the first connecting patterns.
FIGS. 7A to 7C illustrate main portion plan views illustrating a fabricating method of the touch screen panel according to embodiments, which illustrate, for example, a fabricating method of a touch screen panel including the first and second sensing patterns shown in FIG. 4.

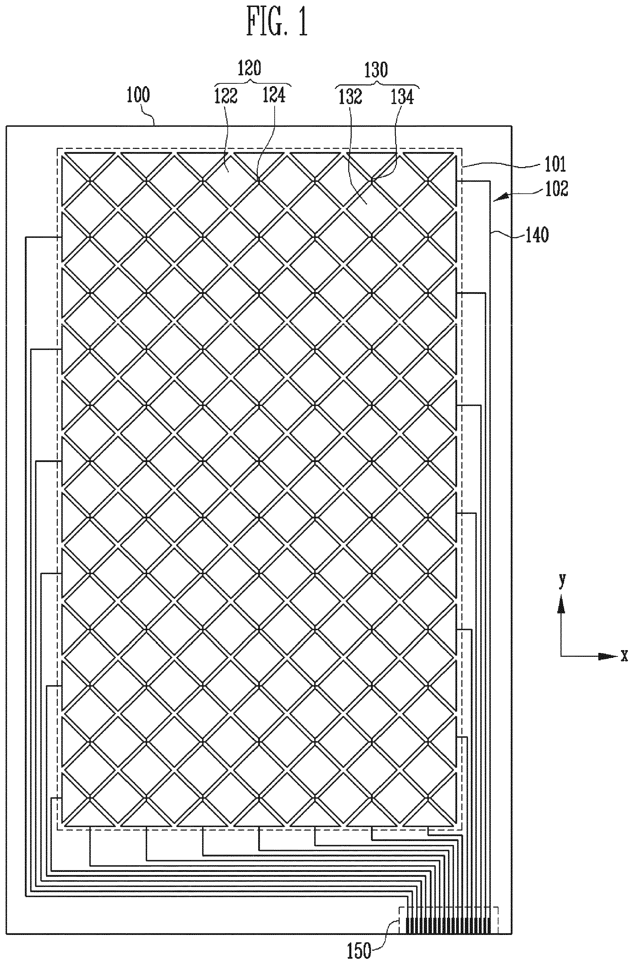

Referring to FIG. 1, the touch screen panel according to this embodiment includes a substrate 100, first and second sensing patterns 120 and 130 formed in a touch active area 101 on the substrate 100, and outer lines 140 and a pad portion 150, which are formed in a touch non-active area 102 on the substrate 100.

The substrate 100 may be formed as various substrates, for example, a glass substrate and a film substrate made of plastic. The area on the substrate 100 may be divided into the touch active area 101 and the touch non-active area 102. For example, the touch active area 101 may be defined corresponding to a display area of a display panel disposed therebeneath, and the touch non-active area 102 may be defined corresponding to a non-display area disposed at the outside of the display area.

The first sensing patterns 120 may be formed along a first direction in the touch active area 101. For example, the first sensing patterns 120 may be formed to be connected for each line along an x-direction. In this case, a plurality of first sensing patterns 120 may be disposed along a y-direction vertical to the x-direction.

The first sensing patterns 120 may include a plurality of first sensing cells 122 and a plurality of first connecting patterns 124. For example, the plurality of first sensing cells 122 may be uniformly distributed in the touch active area 101. The first connecting patterns 124 may be respectively disposed between adjacent first sensing cells 122 so that the first sensing cells 122 are connected for each group along the first direction.

The first sensing cells 122 may be formed to have a predetermined transmittance so that light from the display panel disposed beneath the touch screen panel can be transmitted therethrough. To this end, the first sensing cells 122 may be formed of, for example, a transparent electrode material such as indium tin oxide (ITO). However, the material forming the first sensing cells 122 is not limited to the transparent electrode material. As another example, the first sensing cells 122 may be formed of a metal pattern in the shape of a mesh of fine lines so that a predetermined transmittance can be ensured.

The first connecting patterns 124 may be locally disposed between the first sensing cells 122. The first connecting patterns 124 may be formed to have a width narrower than that of the first sensing cells 122. That is, the first connecting patterns 124 may be locally formed at intersection portions of the first sensing patterns 120 and the second sensing patterns 130. The first connecting patterns 124 may be formed of the same material as that of the first sensing cells 122, e.g., a transparent electrode material such as ITO. Alternatively, the first connecting patterns 124 may be formed of a material different from that of the first sensing cells 122, e.g., a low-resistance metal used to form the outer lines 140, and the like.

The second sensing patterns 130 may be formed along a second direction in the touch active area 101. Here, the second direction may be a direction intersecting the first direction, e.g., a direction perpendicular to the first direction. For example, the second sensing patterns 130 may be formed to be connected for each line along the y-direction. In this case, a plurality of second sensing patterns 130 may be disposed along the x-direction vertical to the y-direction.
The second sensing patterns 130 may include a plurality of second sensing cells 132 and a plurality of second connecting patterns 134. For example, the plurality of second sensing cells 132 may be uniformly distributed in the touch active area 101. The second connecting patterns 134 may be respectively disposed between adjacent second sensing cells 132 so that the second sensing cells 132 are connected for each group along the second direction. Like the first sensing cells 122, the second sensing cells 132 may be formed of a transparent electrode material such as ITO or formed of a metal patterned in the shape of a mesh of fine lines. The second connecting patterns 134 may be formed of the same material as that of the second sensing cells 132. Alternatively, the second connecting patterns 134 may be formed of a material different from that of the second sensing cells 132, e.g., a low-resistance metal used to form the outer lines 140, and the like.

The first and second sensing patterns 120 and 130 may be disposed in the same layer, or may be disposed in different layers with an insulating layer interposed therebetween. Here, the insulating layer may be entirely formed in the touch active area 101.

For example, in a case where the first and second sensing cells 122 and 132 are disposed on the same layer, it is advantageous to decrease the thickness of the touch screen panel, and it is possible to secure optical characteristics entirely uniform in the touch active area 101.

In the first and second sensing cells 122 and 132 disposed in the same layer, the first and second sensing cells 122 and 132 may be alternately distributed and disposed not to overlap with each other. An insulating layer (not shown) is interposed between the first and second connecting patterns 124 and 134 intersecting each other. Accordingly, it is possible to secure insulation properties between the first and second connecting patterns 124 and 134.

That is, the first and second connecting patterns 124 and 134 are disposed in different layers with the insulating layer interposed therebetween. Thus, at least one of the first and second connecting patterns 124 and 134 may be disposed in a layer different from that of the first and second sensing cells 122 and 132, and may be formed in a process different from that of the first and second sensing cells 122 and 132.

Accordingly, among the first and second connecting patterns 124 and 134, the connecting patterns formed in the layer different from that of the first and second sensing cells 122 and 132 need not be formed of the same material as that of the first and second sensing cells 122 and 132. For example, the connecting patterns formed in the layer different from that of the first and second sensing cells 122 and 132 may be formed of a low-resistance opaque metal in order to decrease resistance for each line. In this case, the width or thickness of the connecting patterns may be adjusted so that the visibility of the connecting patterns may be prevented.

The connecting patterns formed in the same layer as that of the first and second sensing cells 122 and 132 may be integrally formed with the first or second sensing cells 122 or 132 in order to promote convenience of processes.

The outer lines 140 may be formed in the touch non-active area 102 positioned at the outside of the touch active area 101. Each outer line 140 may be electrically connected to the first or second sensing patterns 120 or 130 for each line, connected along the first or second direction. Thus, the outer lines 140 can be connected to an external touch driving circuit through the pad portion 150.

Since the outer lines 140 may be disposed in the touch non-active area 102, which is not visible by a user, the material of the outer lines 140 may be selected in a wide range. Therefore, the outer lines 140 may be formed of not only a transparent electrode material used to form the first and second sensing cells 122 and 132 but also a low-resistance metallic material, for example, molybdenum (Mo), silver (Ag), titanium (Ti), copper (Cu), aluminum (Al), or Mo/Al/Mo.

The touch screen panel configured as described above may be a capacitive touch screen panel. If a contact object, for example, a user's finger or stylus pen, comes in contact with the touch screen panel, a change in capacitance, caused at a contact position, may be transferred from the first and second sensing patterns 120 and 130 to the touch driving circuit via the outer lines 140 and the pad portion 150. Then, the contact position can be detected by a position detecting circuit, and the like in the touch driving circuit.

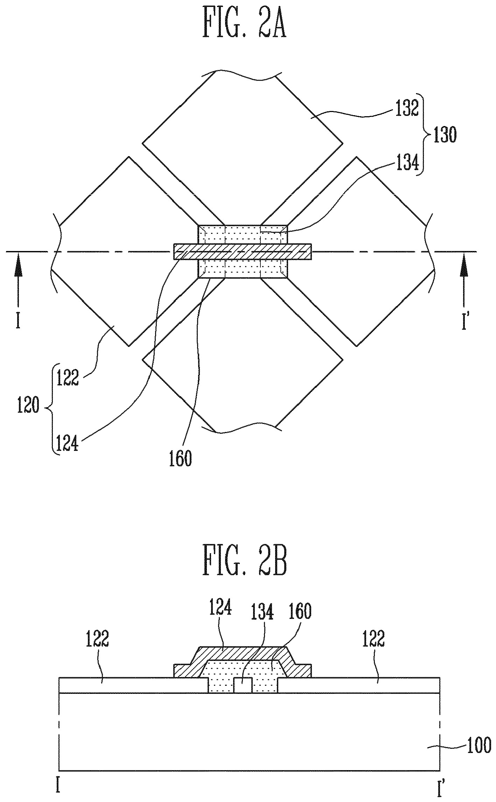

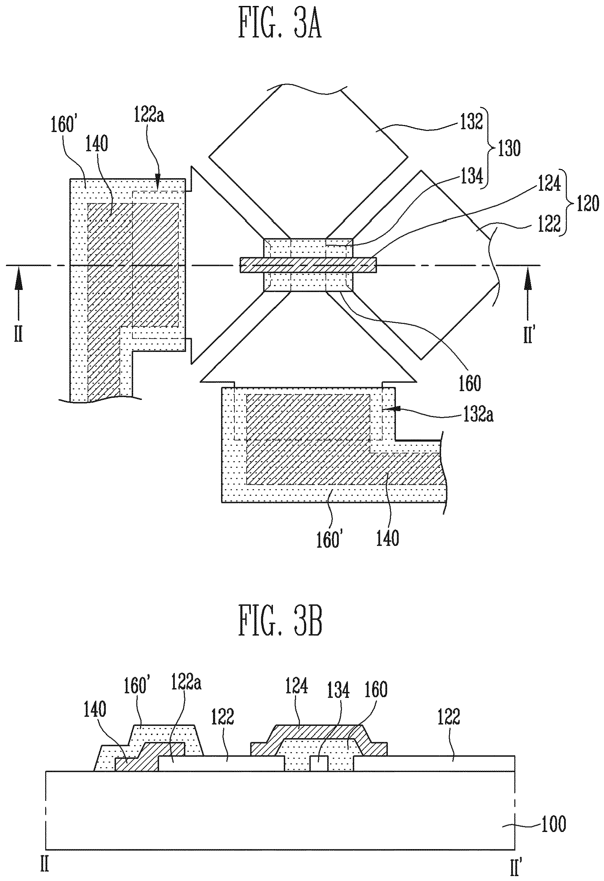

FIG. 2A illustrates a main portion plan view illustrating an example of the first and second sensing patterns formed in the touch active area. FIG. 2B illustrates a sectional view taken along line I-I' of FIG. 2A. FIG. 3A illustrates a main portion plan view illustrating an example of the first and second sensing patterns formed at an edge of the touch active area and the outer lines connected to the first and second sensing patterns. FIG. 3B illustrates a sectional view taken along line II-II' of FIG. 3A.

For convenience, only one first connecting pattern and one second connecting pattern, which intersect each other, are shown in FIGS. 2A to 3B. However, the patterns shown in FIGS. 2A to 3B are repetitively arranged in the touch active area, and hence the plurality of first and second connecting patterns as well as the first and second sensing cells are distributed and arranged in the touch active area. Hereinafter, the first and second connecting patterns are designated as a plurality of first connecting patterns and a plurality of second connecting patterns.

First, referring to FIGS. 2A and 2B, the first sensing patterns 120 may include the first sensing cells 122 and first connecting patterns 124, and the second sensing patterns 130 may include the second sensing cells 132 and second connecting patterns 134. An insulating layer 160 may be interposed between the first and second sensing patterns 120 and 130 at intersection portions of the first and second sensing pattern 120 and 130. That is, at least one connecting patterns of the first and second connecting patterns 124 and 134 may be disposed in a layer different from that of the sensing cells 122 or 132 connected by the connecting patterns.

In this embodiment, a case where the first connecting patterns 124 are disposed in a layer different from that of the first sensing cells 122 is applied as an example. In this case, the first connecting patterns 124 may be disposed as an upper or lower layer relative to the first and second sensing cells 122 and 132. In this embodiment, a case where the first connecting patterns 124 are disposed in the upper layer of, e.g., above, the first and second sensing cells 122 and 132 is applied as an example. That is, the first connecting patterns 124 are formed on the insulating layer 160 at the intersection portions of the first and second sensing patterns 120 and 130.

In this embodiment configured as described above, the plurality of first sensing cells 122 may be formed to be separated from one another as independent patterns on the substrate 100. The first connecting patterns 124 connect adjacent first sensing cells 122 along the first direction while being connected via an upper portion of the insulating layer 160 between the first sensing cells 122. In other words, the first connecting patterns 124 may be formed on the insulating layer 160.

In this case, the insulating layer 160 may be interposed between the first and second connecting patterns 124 and 134 at the intersection portions of the first and second connecting patterns 124 and 134. The insulating layer 160 may be formed as an island-shaped independent pattern for each intersection portion. In this case, end portions of each first connecting pattern 124 may be electrically connected to adjacent first sensing cells 122 exposed to the outside of the island-shaped insulating layer 160 while being overlapped with the adjacent first sensing cells 122. For example, both the end portions of each first connecting pattern 124 may be electrically connected to adjacent first sensing cells 122 while coming in direct contact with the adjacent first sensing cells 122.

The first sensing cells 122 and the first connecting patterns 124 may be formed of different materials. For example, the first sensing cells 122 may be formed of a transparent electrode material, and the first connecting patterns 124 may be formed of a low-resistance metal. That is, the first connecting patterns 124 may be formed of the same material as that used to form the outer lines 140 shown in FIG. 1. However, in a case where the first connecting patterns 124 is formed of an opaque material such as a metal, the width or thickness of the first connecting patterns 124 may be adjusted so that the visibility of the first connecting patterns 124 may be prevented. To this end, each first connecting pattern 124 may be patterned in the shape of a fine line formed along the first direction.

The second sensing cells 132 may be formed on the substrate 100 to be disposed in the same layer as that of the first sensing cells 122. The second sensing cells 132 may be alternately disposed with the first sensing cells 122 not to overlap with the first sensing cell 122. The second connecting patterns 134 may connect adjacent second sensing cells 132 at a lower portion of the insulating layer 160 to be disposed in the same layer as that of the second sensing cells 132. In other words, the second connecting patterns 134 may be formed under the insulating layer 160. In this case, the second connecting patterns 134 may be integrally formed with the second sensing cells 132, using the same material as that of the second sensing cells 132, in the process of forming the second sensing cells 132. For example, the second connecting patterns 134 may be patterned to be integrally connected to the second sensing cells 132 along the second direction, using a transparent electrode material.

The first and second sensing cells 120 and 130, as shown in FIG. 1, are connected to the outer lines 140 at the outside of the touch active area 101. To this end, the shapes of the first and second sensing cells 122 and 132 disposed at an edge of the touch active area 101, as shown in FIGS. 3A and 3B, may be patterned suitable for the boundary of the touch active area 101. For convenience, the connection structure between first and second sensing cells 122 and 132 disposed at a left lower end of the touch active area 101 shown in FIG. 1 and outer lines 140 connected to the first and second sensing cells 122 and 132 is described with respect to FIGS. 3A and 3B.

One region of the first and second sensing cells 122 and 132 disposed at the edge of the touch active area 101 may be extended to be electrically connected to the outer lines 140 while overlapping with the outer lines 140. For example, one region of the first and second sensing cells 122 and 132 disposed at the boundary of the touch active area 101 may respectively have connecting portions 122a and 132a integrally extended to the outside of the touch active area 101. Thus, the first and second sensing cells 122 and 132 can be respectively connected electrically to the outer lines 140 at the connecting portions 122a and 132a. Accordingly, the first and second sensing patterns 120 and 130 can be connected to the external driving circuit for each line along the first or second direction through the outer lines 140. An insulating layer 160' for protecting the outer lines 140 may be further formed on the outer lines 140.

However, the static electricity may be concentrated on the first connecting patterns 124, which are formed in the shape of fine lines with a narrow width on the insulating layer 160. Potential static electricity introduced from the outside of the touch screen panel may be easily concentrated on the first connecting patterns 124 due to the structure of the touch screen panel, and therefore, damage of the first connecting patterns 124 may be caused. For example, the static electricity may easily cause damage of the first connecting patterns 124 at a portion where the first connecting patterns 124 are connected to the first sensing cells 122 via an upper portion of the insulating layer 160, i.e., an upper portion of the boundary of the insulating layer 160.

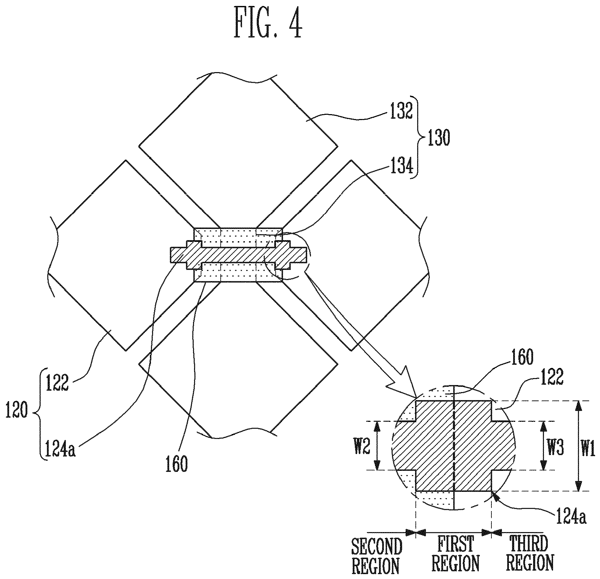

Accordingly, a touch screen panel and a fabricating method thereof where a portion of the first connecting patterns 124 has an increased width is provided, thereby minimizing static electricity. This will be described in detail below with reference to FIGS. 4 to 7C.

FIG. 4 illustrates a main portion plan view illustrating an example of the first and second sensing patterns, which particularly illustrates an embodiment of the first connecting patterns. In FIG. 4, components similar or identical to those of FIG. 2A are designated by like reference numerals. Referring to FIG. 4, the width W1 of each first connecting pattern 124a is formed to be partially enlarged in a first region where the first connecting pattern 124a is overlapped with an edge of the insulating layer 160. That is, the width W1 of the first region where the first connecting pattern 124a is overlapped with the edge of the insulating layer 160 may be enlarged to have a value greater than that (W2 or W3) of the other regions.

For example, the width W1 of the first region where the first connecting pattern 124a is overlapped with the edge of the insulating layer 160 may be formed wider than width W2 of a second region at a central portion of the first connecting pattern 124a intersecting the second connecting pattern 134. For example, the width W1 of the first region may be set to about 15µm to about 20µm, and the width W2 of the second region may be set to about 12µm to about 15 µm.

The width W2 of the second region of the first connecting pattern 124a may be formed narrow to an extent where the visibility of the first connecting patterns 124a can be sufficiently prevented or minimized. If only the width W1 of the first region overlapped with the edge of the insulating layer 160 is formed to be partially enlarged, it is possible to minimize static electricity in the first region while preventing the first connecting patterns 124a from being visible to a user, thereby strengthening the touch screen panel against potential damage from static electricity.

In this case, the length of the first region may be designed in consideration of an alignment error that may occur in a process. For example, the first region may be designed to have a length including an alignment error range between the insulating layer 160 and the first connecting pattern 124a, based on the boundary of the insulating layer 160. For example, the first region may be designed to have a length of about 100 µm by being set in a range within about ±50 µm, based on the boundary of the insulating layer 160 (dashed line in the enlarged portion of FIG. 4).

The width W3 of the first connecting pattern 124a in a third region that is an end portion of the first connecting pattern 124a may be again formed narrower than that W1 of the first region. The width W3 of the third region that is an edge region at the outside of the first region of the first connecting pattern 124a may be formed narrower than width W1 of the first region.

The third region of the first connecting pattern 124a may be an end portion overlapped with the first sensing cell 122. In this embodiment, when the width W3 of the third region is formed narrower than that of width W1 of the first region, it is possible to prevent a moire phenomenon caused by interference with light from the display panel disposed beneath the touch screen panel. To this end, the width W3 of the third region, for example, is set narrower than that of width W1 of the first region. In this case, the width W3 of the third region may be set identical to or narrower than that of width W2 of the second region. For example, the width W3 of the third region may be designed to be about 12 µm to about 15 µm. According to this embodiment, the first connecting patterns 124a are patterned in the shape of fine lines along the first direction. In this case, only the width W1 of both sides of the first region overlapped with the edge of the insulating layer 160 may be enlarged.

Accordingly, it is possible to prevent damage of the touch screen panel, caused by static electricity by minimizing static electricity at the first region of the first connecting pattern 124a, and it is possible to prevent the visibility of the first connecting patterns 124a. Further, it is possible to prevent the moire phenomenon caused by optical interference with the display panel. For example, the first region may be designed to have a quadrangular shape in which the width W1 of the first region is uniformly maintained in the first region as shown in FIG. 4. However, the shape of the first region is not limited to the quadrangular shape, and may be variously modified.

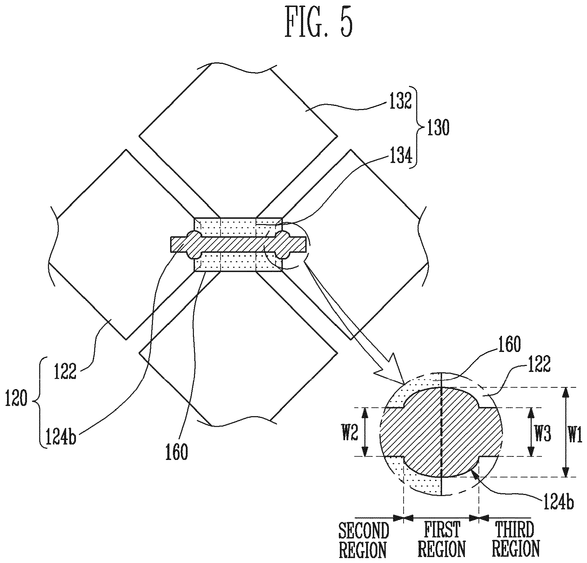

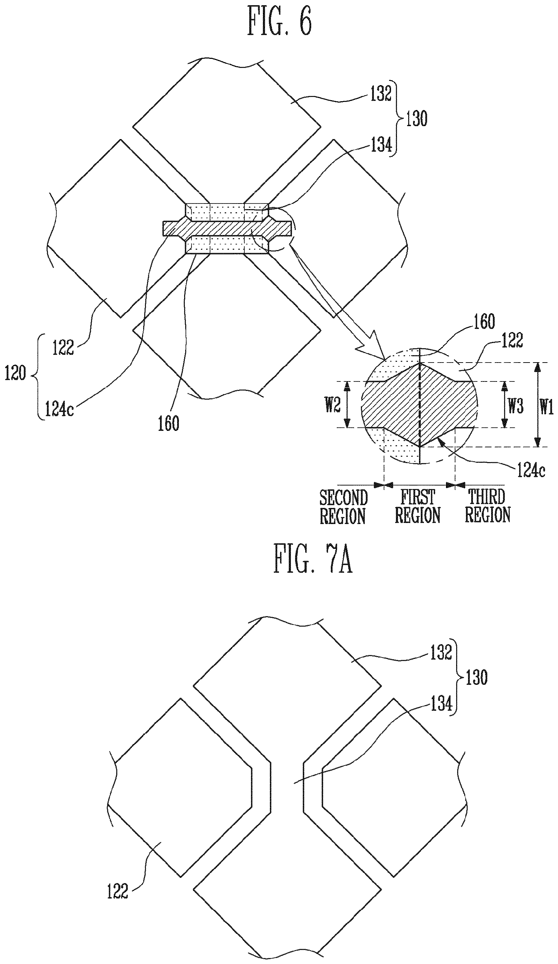

Hereinafter, embodiments in which the shape of the first region is modified are described in detail with reference to FIGS. 5 and 6. FIG. 5 illustrates a main portion plan view illustrating another example of the first and second sensing patterns according to an embodiment, which particularly illustrates another embodiment of the first connecting patterns. FIG. 6 illustrates a main portion plan view illustrating still another example of the first and second sensing patterns according to an embodiment, which particularly illustrates still another embodiment of the first connecting patterns. In FIGS. 5 and 6, components similar or identical to those of FIG. 4 are designated by like reference numerals.

First, referring to FIG. 5, a first region of each first connecting pattern 124b may be patterned to have an elliptical shape in which the boundary of the insulating layer 160 has a relatively wide width. The first region of the first connecting pattern 124b may be modified to have a circular shape. As shown in FIG. 6, a first region of each first connecting pattern 124c is patterned so that a portion of the first region with the widest width is positioned at the boundary of the insulating layer 160. In this case, the first region of the first connecting pattern 124c may be patterned in a polygonal shape having an angle at which the first region is bent, based on the boundary of the insulating layer 160. That is, the first region of each first connecting pattern 124b or 124c may be modified in various shapes. For example, the first region may be patterned to have a polygonal, elliptical, or circular shape.

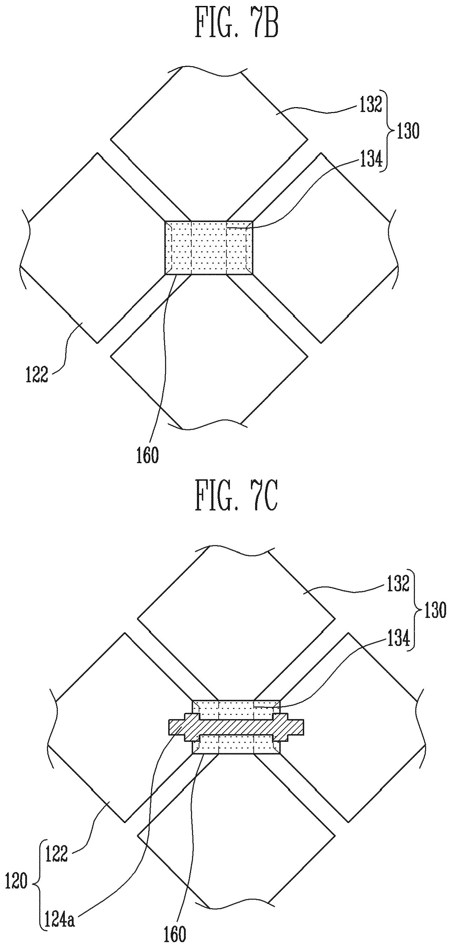

FIGS. 7A to 7C illustrate main portion plan views illustrating a fabricating method of the touch screen panel according to the embodiment, which illustrate, for example, a fabricating method of the touch screen panel including the first and second sensing patterns shown in FIG. 4. Referring to FIGS. 7A to 7C, a fabricating method according to this embodiment includes forming the first and second sensing cells 122 and 132 on a substrate as shown in FIG. 7A, forming the insulating layer 160 on the substrate having the first and second sensing cells 122 and 132 formed thereon as shown in FIG. 7B, and forming the first connecting patterns 124a on the substrate on which the first and second sensing cells 122 and 132 and the insulating layer 160 are formed as shown in FIG. 7C.

More specifically, as shown in FIG. 7A, the forming of the first and second sensing cells 122 and 132 includes patterning, on the substrate, the first sensing cells 122 arranged along a first direction while being separated from each other as independent patterns, and simultaneously patterning the second sensing cells 132 disposed between the first sensing cells 122 to be integrally connected to the second connecting patterns 134 along a second direction. In this case, the first sensing cells 122, the second sensing cells 132, and the second connecting patterns 134 may be formed of the same material in the same process. For example, the first sensing cells 122, the second sensing cells 132, and the second connecting patterns 134 may be formed of a transparent electrode material.

As shown in FIG. 7B, the forming of the insulating layer 160 includes patterning the insulating layer 160 to be formed as an island-shaped independent pattern on each second connecting pattern 134. As shown in FIG. 7C, the forming of the first connecting patterns 124a includes forming, on the insulating layer 160, the first connecting patterns 124a electrically connecting the first sensing cells 122 along the first direction. That is, the first connecting patterns 124a may be formed in a process different from that of the first sensing cells 122. In this case, the first connecting patterns 124a may be formed of a material different from that of the first sensing cells 122. For example, the first connecting patterns 124a may be formed of a low-resistance metal. In this case, two end portions of each first connecting pattern 124a may be electrically connected to adjacent first sensing cells 122 exposed to the outside of the island-shaped insulating layer 160 while being overlapped with the adjacent first sensing cells 122.

However, in this embodiment, the first connecting patterns 124a are patterned to have the shape of fine lines along the first direction. In this case, the first connecting patterns 124a may be patterned so that only the widths of both sides of the first region overlapped with edges of the insulating layer 160 are enlarged. That is, the first connecting patterns 124a may be patterned so that the width of the first region where the first connecting pattern 124a is overlapped with the edge of the insulating layer 160 is formed wider than that of a second region at a central portion of the first connecting pattern 124a intersecting the second connecting pattern 134 and that of a third region that is an edge at the outside of the first region. To this end, the first region where the first connecting pattern 124a is overlapped with the boundary of the insulating layer 160 may be patterned to have, for example, a polygonal, elliptical or circular shape.

In the touch screen panel and the fabricating method thereof, the width of the first region of each first connecting pattern 124a may be formed to be partially enlarged, so that it is possible to minimize static electricity at the first connecting patterns 124a. Accordingly, it is possible to prevent damage of the touch screen panel, caused by the static electricity. Further, other regions of each first connecting pattern 124a are formed to have a width narrower than that of the first region, so that it is possible to prevent or substantially minimize the visibility of the first connecting patterns 124a and to prevent or substantially minimize a moire phenomenon caused by optical interference with the display panel.

By way of summation and review, a capacitive touch screen panel may include first and second sensing patterns formed along different directions. If the first and second sensing patterns are disposed in the same layer, it is advantageous to decrease the thickness of the touch screen panel, and it is possible to ensure uniform optical characteristics throughout the entire touch active area.

In a case where the first and second sensing patterns are disposed in the same layer as described herein, the first and second sensing patterns are designed to maintain a state in which the first and second sensing patterns are stably insulated from each other even at an intersection portion thereof. To this end, one or more sensing patterns of the first and second sensing patterns may be connected along a first or second direction by connecting patterns disposed in a layer different from that of the first and second sensing patterns at the intersection portion of the first and second sensing patterns.

However, the intersection portion of the first and second sensing patterns may be formed to have a relatively narrow width, and therefore, the resistance of the intersection portion is large. As a result, when static electricity is introduced from the outside of the touch screen panel, Joule heating may be concentrated on the intersection portion of the first and second sensing patterns. Therefore, the connecting patterns and other elements may be damaged, thereby causing a driving failure of the touch screen panel.

In the touch screen panel and the fabricating method thereof, it is possible to prevent damage of the touch screen panel caused by minimizing static electricity at the first connecting patterns, and it is possible to prevent or substantially minimize the visibility of the first connecting patterns. Further, it is possible to prevent a moire phenomenon caused by optical interference with the display panel.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A touch screen panel, comprising:
a substrate (100);
first sensing patterns (120) configured to include a plurality of first sensing cells (122) separated from one another as independent patterns, and first connecting patterns (124) connecting the first sensing cells along a first direction;
second sensing patterns (130) configured to include a plurality of second sensing cells (132) on the substrate, and second connecting patterns (134) connecting the second sensing cells along a second direction;
an insulating layer (160) interposed between the first and second connecting patterns at intersection portions of the first connecting patterns and the second connecting patterns; and
outer lines (140) formed in a touch non-active area (102) of the substrate,
wherein the first sensing patterns and second sensing patterns are formed in a touch active area (101) of the substrate,
wherein the first sensing cells and the second sensing cells disposed at a boundary of the touch active area respectively have first connecting portions (122a) and second connecting portions (132a) integrally extended to the outside of the touch active area, and
wherein end portions of each first connecting pattern electrically connect adjacent first sensing cells exposed to the outside of the insulating layer while overlapping with the adjacent sensing cells,
each first connecting pattern has a first region overlapping an edge of the insulating layer, a second region intersecting each second connecting pattern, and a third region which is an edge region outside of the first region, and
a width of the third region is narrower than a width of the first region.

2. The touch screen panel as claimed in claim 1, a width of the second region is narrower than the width of the first region

3. The touch screen panel as claimed in claim 1, wherein the first connecting portions (122a) and the second connecting portions (132a) overlap the outer lines (140) such that the first sensing cells (122) and the second sensing cells (132) are respectively connected electrically to the outer lines through the first connecting portions and the second connecting portions.

4. The touch screen panel as claimed in claim 2, further comprising an insulating layer (160') formed on the outer lines (140) for protecting the outer lines.

5. The touch screen panel as claimed in claim 1, wherein the first sensing cells (122) and the first connecting patterns (124) include different materials.

6. The touch screen panel as claimed in any one of the preceding claims, wherein the first sensing cells (122) include a transparent electrode material, and the first connecting patterns (124) include a metal.

7. The touch screen panel as claimed in any one of the preceding claims, wherein the first connecting patterns (124) are patterned in the shape of fine lines along the first direction, and
wherein only the width of both sides of the first region overlapped with the edge of the insulating layer (160) is enlarged.

8. The touch screen panel as claimed in any one of the preceding claims, wherein each first connecting pattern (124) is on the insulating layer (160), and each second connecting pattern (134) is under the insulating layer.

9. The touch screen panel as claimed in any one of the preceding claims, wherein the second sensing cells (132) are integrally patterned with the second connecting patterns (134) along the second direction.

10. The touch screen panel as claimed in any one of the preceding claims, wherein the first sensing cells (122) and the second sensing cells (132) are alternately distributed and disposed in the same layer on the substrate (100) so as not to overlap with each other.

11. A touch screen panel, comprising:
a substrate (100);
first sensing patterns (120) configured to include a plurality of first sensing cells (122) separated from one another as independent patterns, and first connecting patterns (124) connecting the first sensing cells along a first direction;
second sensing patterns (130) configured to include a plurality of second sensing cells (132) on the substrate, and second connecting patterns (134) connecting the second sensing cells along a second direction; and
an insulating layer (160) interposed between the first and second connecting patterns at intersection portions of the first connecting patterns and the second connecting patterns;
wherein end portions of each first connecting pattern electrically connect adjacent first sensing cells exposed to the outside of the insulating layer while overlapping with the adjacent sensing cells,
each first connecting pattern has a first region overlapping an edge of the insulating layer, a second region intersecting each second connecting pattern, and a third region which is an edge region outside of the first region, and
a portion of the first region with the widest width is positioned at a boundary of the insulating layer, and
wherein the first region has an elliptical or a circular shape in which the portion of the first region with the widest width is curved.

12. A touch screen panel, comprising:
a substrate (100);
first sensing patterns (120) configured to include a plurality of first sensing cells (122) separated from one another as independent patterns, and first connecting patterns (124) connecting the first sensing cells along a first direction;
second sensing patterns (130) configured to include a plurality of second sensing cells (132) on the substrate, and second connecting patterns (134) connecting the second sensing cells along a second direction;
an insulating layer (160) interposed between the first and second connecting patterns at intersection portions of the first connecting patterns and the second connecting patterns; and
outer lines (140) formed in a touch non-active area (102) of the substrate,
wherein the first sensing patterns and second sensing patterns are formed in a touch active area (101) of the substrate,
wherein the first sensing cells and the second sensing cells disposed at a boundary of the touch active area respectively have first connecting portions (122a) and second connecting portions (132a) integrally extended to the outside of the touch active area,
wherein end portions of each first connecting pattern electrically connect adjacent first sensing cells exposed to the outside of the insulating layer while overlapping with the adjacent sensing cells,
each first connecting pattern has a first region overlapping an edge of the insulating layer, a second region intersecting each second connecting pattern, and a third region which is an edge region outside of the first region, and
a portion of the first region with the widest width is positioned at the boundary of the insulating layer, and
wherein the first region has a polygonal shape in which the portion of the first region with the widest width is bent at an angle.
